# EUROPÄISCHE PATENTSCHRIFT

(11) **EP 2 242 780 B1**
(45) Veröffentlichungstag und Bekanntmachung des Hinweises auf die Patenterteilung: **14.12.2011**
(21) Anmeldenummer: 09708554.2
(22) Anmeldetag: 12.01.2009
(51) Int. Cl.: C08F 218/08

(54) **VINYLESTER-MALEINSÄUREDERIVAT-COPOLYMERE**
VINYL ESTER MALEIC ACID DERIVATIVE COPOLYMERS
COPOLYMÈRES D'ESTER DE VINYLE ET DE DÉRIVÉ D'ACIDE MALÉIQUE

(30) Priorität: 07.02.2008 EP 08101373
(43) Veröffentlichungstag der Anmeldung: 27.10.2010
(73) Patentinhaber: Construction Research & Technology GmbH, 83308 Trostberg (DE)
(72) Erfinder: MEZGER, Jochen, 84518 Garching an der Alz (DE); KRAUS, Alexander, 83552 Evenhausen (DE); GRASSL, Harald, 84550 Feichten an der Alz (DE); BECHER, Kerstin, 83530 Schnaitsee Waldhausen (DE)
(86) Internationale Anmeldenummer: PCT/EP2009/050259
(87) Internationale Veröffentlichungsnummer: WO 2009/098103

(56) Entgegenhaltungen:
- US-A- 2 668 810
- US-A- 5 385 971

## Beschreibung

Die vorliegende Erfindung betrifft ein Verfahren zur Herstellung eines Copolymers, das Copolymer sowie die Verwendung des Copolymers.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel haben sich in der Praxis Maleinsäurehalbesterstruktureinheiten aufweisende Copolymere mit Polyethoxyseitenkettensegmenten bewährt, welche durch radikalische Lösungspolymerisation hergestellt werden. Als Lösungsmittel wird Wasser verwendet. Die hergestellte wässrige Copolymerlösung könnte praktisch ohne weitere Aufarbeitung direkt als Dispergiermittel bzw. Fließmittel eingesetzt werden. Jedoch weisen derartige wässrige Produkte keine ausreichende Lagerstabilität auf. Um eine hinreichende Lagerstabilität zu gewährleisten, muss Fließmittel auf Basis von wässrigen Maleinsäurehalbesterlösungen das Wasser durch energiereiche Trocknung, z.B. durch Sprühtrocknung, entzogen werden. Dies vermindert die wirtschaftliche Attraktivität derartiger Fließmittel erheblich.

US 5385971 beschreibt Polymere, die als hydraulische Zementbindemittel benutzt werden können, und insbesondere ein Verfahren zur Polymerisation von 0.2 mol% Maleinsäurehalbesterderivat (Makromonomer, das einen Polyalkylenglycol Rest enthält) und 99.8 mol% Vinylester Monomeren.

Eine Herstellungsalternative zu der vorstehend erläuterten wässrigen Lösungspolymerisation mit nachfolgender Trocknung könnte in der chinesischen

Zeitschrift" Yingyong Huaxue (1993), 10 (6), 14-18" (in Englisch: " Chinese Journal of Applied Chemistry (1993), 10 (6), 14-18") beschriebenen Veresterung der Anhydrit-Seitengruppen von Maleinsäureanhydrit-Vinylacetat Copolymeren mit Polyethylenglykolen, gesehen werden. Nachteilig an diesem Pfropfverfahren ist, dass Veresterungskatalysatoren, wie z.B. 4-Dimethylaminopyridin, oder Lewis-Säuren, wie Zinkchlorid, eingesetzt werden, die in einem gewissen Umfang auch eine Deacetylierung des Vinylacetat-Bausteins bewirken. In der Praxis führt dies zu einer schlecht kalkulierbaren Veränderung der Polymereigenschaften. Hinzu kommt, dass verhältnismäßig lange Reaktionszeiten in Kauf genommen werden müssen. Schließlich kann auch gesagt werden, dass durch Pfropfverfahren normalerweise nicht so hohe Seitenkettendichten (betrifft lange Seitenketten) im Copolymer erzielt werden können wie vergleichsweise durch Copolymerisation von Monomeren, die entsprechende Seitenketten aufweisen. Somit kann gesagt werden, dass dieses Pfropfverfahren keine attraktive Herstellungsalternative ist.

Der vorliegenden Erfindung lag somit die Aufgabe zugrunde, ein Verfahren zur Herstellung eines qualitativ guten und vor allem wirtschaftlichen Dispergiermittels für hydraulische Bindemittel bereitzustellen, wobei das Dispergiermittel auf der Basis von Maleinsäurehalbesterstruktureinheiten aufweisenden Polymeren sein soll.

Die Lösung dieser Aufgabe ist ein Verfahren zur Herstellung eines Copolymers durch Umsetzung eines Maleinsäurehalbesterderivats mit einem Vinylester in Anwesenheit eines radikalischen Polymerisationsinitiators und einer Säure mit einem pKa-Wert kleiner 1,8 so dass in dem Copolymer erzeugt werden
i) 10 bis 75 mol-% einer Maleinsäurehalbesterderivat-Struktureinheit α,
ii) 25 bis 90 mol-% einer Vinylester-Struktureinheit β,
wobei die Maleinsäurehalbesterderivat-Struktureinheit α durch folgende allgemeine Formel (I) repräsentiert wird 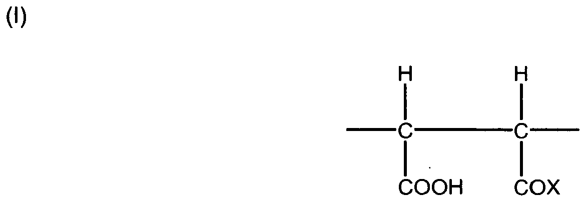 mit
X gleich oder verschieden (d.h. variabel innerhalb eines Copolymers) sowie repräsentiert durch -O-(CₘH₂ₘO)ₙ-R¹ mit R¹ gleich oder verschieden sowie repräsentiert durch einen verzweigten oder unverzweigten C₁ bis C₂₀ Alkylrest (bevorzugt CH₃), C₅ bis C₈ Cycloalkylrest (bevorzugt Cyclohexyl) und/ oder C₆ bis C₁₄ Alkylarylrest (bevorzugt Toluyl) - (insgesamt gesehen R¹ jedoch besonders bevorzugt CH₃),
m gleich oder verschieden (d.h. variabel innerhalb eines Copolymers) sowie repräsentiert durch 2, 3 und/oder 4,
n gleich oder verschieden (d.h. variabel innerhalb eines Copolymers) sowie repräsentiert durch eine ganze Zahl von 1 bis 150,
sowie die Vinylester-Struktureinheit β durch folgende allgemeine Formel (II) repräsentiert wird 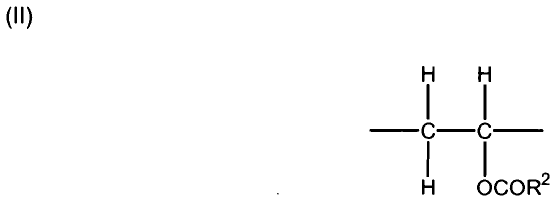 mit
R² gleich oder verschieden (d.h. variabel innerhalb eines Copolymers) sowie repräsentiert durch einen verzweigten oder unverzweigten C₁ bis C₁₂ Alkylrest (bevorzugt CH₃), und
die Umsetzung des Maleinsäurehalbesterderivats mit dem Vinylester in einem Reaktionsgemisch erfolgt, welches weniger als 10 Gew.-% Wasser aufweist.

Der pKa-Wert der Säure wird wie üblich unter Standardbedingungen in wässriger Lösung bestimmt (nicht in dem Reaktionsgemisch).

Das Verfahren kann in diskontinuierlicher, halbkontinuierlicher sowie in kontinuierlicher (z.B. auf einem spinning-disc Reaktor) Betriebsweise durchgeführt werden. Das erfindungsgemäße Verfahren bzw. das als Verfahrensprodukt erhaltene Copolymer sind besonders kostengünstig. Durch die Anwesenheit der Säure können fast quantitative Umsätze erzielt werden. In dem Verfahren kann auf die üblichen Molekulargewichtsregler, wie z.B. Mercaptane, verzichtet werden. Aufgrund des niedrigen Wassergehalts, bzw. der Abwesenheit von Wasser besteht eine gute Lagerstabilität.

Die üblicherweise eingesetzten Standardentschäumer sind in dem mit dem erfindungsgemäßen Verfahren hergestellten Copolymer löslich, so dass zur Vermeidung von Schaumbildung das mit dem erfindungsgemäßen Verfahren hergestellte Copolymer keine einpolymerisierten Entschäumerstruktureinheiten benötigt. Die Abbindegeschwindigkeit von Beton wird normalerweise durch das mit dem erfindungsgemäßen Verfahren hergestellten Copolymer nicht merklich verzögert.

In einer besonders bevorzugten Ausführungsforni enthält das Reaktionsgemisch, in welchem die Umsetzung des Maleinsäurehalbesterderivats mit dem Vinylester erfolgt, pro insgesamt umgesetztes Mol Maleinsäurehalbesterderivat 0,001 mol bis 0,7 mol der Säure, sowie jeweils optional Maleinsäure, Maleinsäureanhydrit und Polyetheralkohol gemäß der allgemeinen Formel (III)

(III) HO-(CₘH2ₘO)ₙ-R³

mit
R³ gleich oder verschieden (variabel innerhalb von verschiedenen Polyetheralkoholindividuen, welche in der Reaktionsmischung vorliegen können) sowie repräsentiert durch einen verzweigten oder unverzweigten C₁ bis C₂₀ Alkylrest (bevorzugt CH₃), C₅ bis C₈ Cycloalkylrest (bevorzugt Cyclohexyl) und/oder C₆ bis C₁₄ Alkylarylrest (bevorzugt Toluyl) - (insgesamt gesehen R³ jedoch besonders bevorzugt CH₃),
m gleich oder verschieden (variabel innerhalb von verschiedenen Polyetheralkoholindividuen, welche in der Reaktionsmischung vorliegen können) sowie repräsentiert durch 2, 3 und/oder 4,
n gleich oder verschieden (variabel innerhalb von verschiedenen Polyetheralkoholindividuen, welche in der Reaktionsmischung vorliegen können) sowie repräsentiert durch eine ganze Zahl von 1 bis 150.

Normalerweise erfolgt dann die Umsetzung des Maleinsäurehalbesterderivats mit dem Vinylester in dem Reaktionsgemisch mit der Maßgabe, dass die Summe der Gewichtsanteile des Copolymers, der Säure, des Maleinsäurehalbesterderivats, des Vinylesters, der Maleinsäure, des Maleinsäureanhydrits und des Polyetheralkohols der allgemeinen Formel (III) in dem Reaktionsgemisch mindestens 60 % beträgt.

Gemäß einer weiteren bevorzugten Ausführungsform werden durch Umsetzung des Maleinsäurehalbesterderivats mit dem Vinylacetat in dem Copolymer erzeugt
i) 35 bis 55, bevorzugt 45 bis 50 mol-% der MaleinsäureStruktureinheit α,
ii) 45 bis 65, bevorzugt 50 bis 55 mol-% der Vinylacetat-Struktureinheit β.

Bevorzugt wird die Maleinsäurehalbesterderivat-Struktureinheit α durch folgende allgemeine Formel (I) repräsentiert, 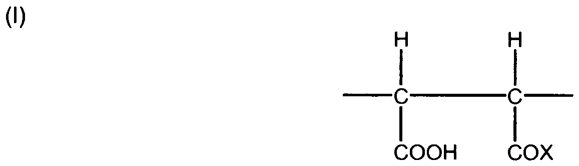 mit
X gleich oder verschieden sowie repräsentiert durch -O-(CₘH₂ₘO)ₙ-CH₃
m gleich oder verschieden sowie repräsentiert durch 2 und/oder 3 (bevorzugt 2),
n gleich oder verschieden sowie repräsentiert durch eine ganze Zahl von 4 bis 60 (bevorzugt 8 bis 50).

Die mit dem erfindungsgemäßen Verfahren hergestellten Copolymere sind je nach Alkoxylierungsgrad und Verfahrensvariante (insbesondere Dosierung von Vinylester, Starttemperatur) noch flüssig und damit gießfähig. Häufig weisen die Copolymere Polyetherseitenkettensegmente auf, die sowohl Ethoxygruppen (m = 2) als auch Propoxygruppen (m = 3) aufweisen. Die Propoxygruppen erniedrigen den Schmelzpunkt des Copolymers. Die mit dem erfindungsgemäßen Verfahren hergestellten Copolymere können für die Anwendung auch so gemischt werden, dass flüssige Copolymere mit kürzeren Seitenketten und geringeren durchschnittlichen Molekulargewichten als "Lösungsmittel" eingesetzt werden für viskosere Copolymerspezies mit längeren Seitenketten und höheren Molekulargewichten.

Bevorzugt wird als Vinylester Vinylacetat eingesetzt und die Vinylester-Struktureinheit β so durch die allgemeine Formel (II) repräsentiert, dass R² gleich CH₃. Typischerweise sind durch radikalische Polymerisation von Maleinsäurederivaten mit Vinylester erhaltenen Copolymere in etwa alternierend aufgebaut. Ein alternierender Aufbau eines Copolymers bewirkt normalerweise eine bessere Vorhersagbarkeit der Polymereigenschaft sowie eine leichtere synthetische Planung. Das mit dem erfindungsgemäßen Verfahren hergestellte Copolymer kann prinzipiell noch, jedoch bevorzugt nur bis zu 10 Mol % bezogen auf die Summe aller Struktureinheiten des Copolymers, weitere Struktureinheiten enthalten, z.B. die des Styrols oder die von Vinylethern.

In einer Ausführungsform der Erfindung wird allerdings in dem erfindungsgemäßen Verfahren neben dem Maleinsäurehalbesterderivat und dem Vinylester zusätzlich auch Maleinsäure und/oder Maleinsäureanhydrit umgesetzt. Dann werden in dem Copolymer erzeugt bis zu 75 Mol-% Struktureinheiten umfassend die Maleinsäurehalbesterderivat-Struktureinheit α, die Maleinsäurestruktureinheit α sowie die Maleinsäureanhydritstruktureinheit α ", wobei die Maleinsäurestruktureinheit α sowie die Maleinsäureanhydritstruktureinheit α " jeweils durch folgende Formeln (IV) und (V) repräsentiert werden: 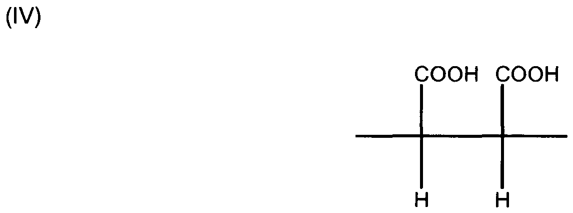 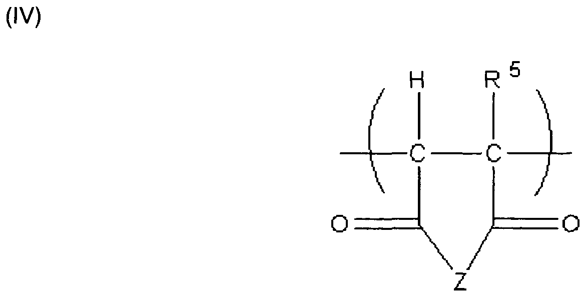 mit
R⁵ repräsentiert durch H und Z repräsentiert durch O.

Durch den Einsatz von Maleinsäure und/oder Maleinsäureanhydrit als Comonomere kann die Seitenkettendichte (bezüglich der langen Seitenketten) herabgesetzt werden. Die Ladungsdichten des Copolymers können auf diese Weise variiert werden, wodurch ein modifiziertes Adsorptionsverhalten des Copolymers bewirkt wird.

In der Regel enthält das Reaktionsgemisch, in dem die Umsetzung des Maleinsäurehalbesterderivats mit dem Vinylester erfolgt, weniger als 3 Gew.-%, besonders bevorzugt weniger als 0,2 Gew.-%, Wasser. Optimal wäre ein wasserfreies Reaktionsgemisch.

Normalerweise weist dieses Reaktionsgemisch pro insgesamt umgesetztes Mol Maleinsäurehalbesterderivat 0,01 mol bis 0,3 mol, bevorzugt 0,05 mol bis 0,3 mol, der Säure auf.

Bevorzugt hat die Säure einen pKa-Wert von kleiner 1,6 besonders bevorzugt kleiner 1,3.

Häufig liegt die Säure als Methansulfonsäure, Schwefelsäure, Para-Toluolsulfonsäure, Trifluormethansulfonsäure, Benzolsulfonsäure und/oder Trichloressigsäure oder einer Mischung aus mindestens zwei dieser Spezies, vor.

Meist beträgt die Summe der Gewichtsanteile von dem Copolymer, der Säure, dem Maleinsäurehalbesterderivat, dem Vinylester, der Maleinsäure, dem Maleinsäureanhydrit und dem Polyetheralkohol der allgemeinen Formel (III) in dem Reaktionsgemisch mindestens 70 %, bevorzugt mindestens 90 %.

Typischerweise liegt der Polyetheralkohol der allgemeinen Formel (III) gemäß HO-(CₘH₂ₘO)ₙ-CH₃ vor, mit m gleich oder verschieden sowie repräsentiert durch 2 und/oder 3 (bevorzugt 2) sowie n gleich oder verschieden sowie repräsentiert durch eine ganze Zahl von 4 bis 60 (bevorzugt 8 bis 50).

In einer Ausführungsform der Erfindung sind in dem Reaktionsgemisch neben dem Polyetheralkohol gemäß der allgemeinen Formel (III) noch weitere Alkohole enthalten, welche maximal 12 Kohlenstoffatome aufweisen. Diese weiteren Alkohole, welche maximal 12 Kohlenstoffatome aufweisen, können als primäre aliphatische Alkohole, insbesondere Methanol, Ethanol, n-Butanol oder als sekundäre Alkohole, insbesondere Isopropylalkohol, Cyclohexanol oder Mischungen davon, vorliegen. Üblicherweise liegen die weiteren, maximal 12 Kohlenstoffatome aufweisenden Alkohole in dem Reaktionsgemisch gegenüber der Summe des Maleinsäurehalbesterderivats und des Polyetheralkohols gemäß der allgemeinen Formel (III) in einem molaren Unterschuss vor.

Gegebenenfalls kann die zugrunde liegende Umesterung durch übliche Veresterungskatalysatoren, wie z.B. Methansulfonsäure, Toluolsulfonsäure, Natriumacetat, Triethylamin, Pyridin oder Pyridin-Derivate wie 4-Dimethylaminopyridin (DMAP), aktiviert werden.

Es soll auch erwähnt sein, dass in dem durch das erfindungsgemäße Verfahren hergestellte Copolymer entsprechende Esterspaltungen an den Seitenketten auftreten können (z.B. aufgrund von vorhandenem Wasser), so dass Hydroxylgruppen terminierte Seitenketten resultieren.

Zweckmäßigerweise wird die Umsetzung des Maleinsäurehalbesterderivats mit dem Vinylester bei einer Temperatur von 0 bis 150 °C, bevorzugt 40 bis 140 °C und Drücken von 0 bis 5 bar, bevorzugt ca. Atmosphärendruck, durchgeführt.

Normalerweise liegt der Polymerisationsinitiator als Azoverbindung oder als organisches Peroxid, bevorzugt als Dibenzoylperoxid, vor. Die organischen Peroxide werden in fester Form oder als Lösungen zudosiert.

Häufig erfolgt die Umsetzung des Maleinsäurehalbesterderivats mit Vinylester mit einem Umsatz von mindestens 80 %, bevorzugt mindestens 90 %, bezogen auf die molare Summe von Maleinsäurehalbesterderivat und Vinylacetat.

Nach Umsetzung des Maleinsäurehalbesterderivats mit Vinylester - also vorzugsweise nach der Copolymerisation - kann noch mit einer Base, z.B. Triethylamin, Ammoniak oder Alkoholat, neutralisiert werden. Typischerweise wird dadurch ein pH-Wert von 4 bis 7 eingestellt. Durch die Zugabe von Base (Salzbildung) wird dem Verfahrensprodukt häufig eine festere Konsistenz verliehen, wodurch dessen Anwendung als Pulver verbessert werden kann.

Weiterhin betrifft die Erfindung ein Copolymer, welches gemäß dem vorstehend beschriebenen Verfahren herstellbar ist. Das erfindungsgemäße Copolymer weist in der Regel ein gewichtsmittleres Molekulargewicht von 10000 bis 350000, bevorzugt von 20000 bis 200000, auf.

Schließlich betrifft die Erfindung die Verwendung des erfindungsgemäßen Copolymers als Dispergiermittel für hydraulische Bindemittel, welches meist als Zement, Kalk, Gips oder Anhydrit, bevorzugt als Zement, vorliegt. Das erfindungsgemäße Copolymer eignet sich besonders für die Anwendung in Trockenmörteln. Auch die Anwendung in Zusammenhang mit Gipskartonplatten sollte erwähnt sein.

Die nachstehenden Ausführungsbeispiele sollen die Erfindung näher erläutern:
Allgemein:
   Die nachfolgenden Herstellungsbeispiele wurden in einem 500 ml-Druck-Doppelwandgefäß mit Thermometer, Ankerrührer, Druckmessgerät und 2 Anschlüssen für separate Zuläufe durchgeführt.

### Beispiel 1

### Synthese ohne Säurezusatz (nicht erfindungsgemäß):

236,37g (0,19 mol) Methylpolyethylenglykol-monomaleat (1150 MPEG), 1,85 g (18,9 mmol) Maleinsäureanhydrit und 27,62 g (0,32 mol) Vinylacetat werden vorgelegt und bei 80 °C eine Mischung aus 3,36 g (10,41 mmol) Dibenzoylperoxid (75 %) und 9,67 g (83,34 mmol) Maleinsäure innerhalb 1 h zudosiert, wobei sich ein Spitzendruck von 0,8 bar entwickelt. Man lässt abkühlen und rührt noch 1 h. Das Gelpermeationschromatogramm (GPC) zeigt einen Umsatz von lediglich 19 %.

### Beispiel 1a

### Synthese mit Säurezusatz:

236,37 g (0,19 mol) Methylpolyethylenglykol-monomaleat (1150 MPEG), 1,85 g (18,9 mmol) Maleinsäureanhydrit, 27,62 g (0,32 mol) Vinylacetat und 0,4 g (4,17 mmol) Methansulfonsäure werden vorgelegt und bei 80°C eine Mischung aus 3,36 g (10,41 mmol) Dibenzoylperoxid (75 %) und 9,67 g (83,34 mmol) Maleinsäure innerhalb 1 h zudosiert, wobei sich ein Spitzendruck von 1,0 bar entwickelt. Man lässt abkühlen und rührt noch 1 h. Das GPC zeigt einen Umsatz von 91 %.

### Beispiel 2

142,05 g (0,28 mol) Methylpolyethylenglykol (Mw 500), 30,63 g (0,31 mol) Maleinsäureanhydrit und 0,23 g (2,84 mmol) Natriumacetat werden vorgelegt und 1 h bei 80 °C gerührt. Anschließend werden 37,66 g (0,44 mol) Vinylacetat und 0,61 g (6,25 mmol) Methansulfonsäure zugegeben und bei 70 °C 5,04 g (15,6 mmol) Dibenzoylperoxid (75 %) innerhalb 1 h zudosiert, wobei sich ein Spitzendruck von ca. 1,1 bar entwickelt. Nach beendeter Zugabe wird noch eine Stunde gerührt, wobei sich die Reaktionsmischung abkühlt. Man erhält ein dunkel orangefarbenes, gelartiges Polymer mit einer zahlenmittleren Molmasse (Mₙ) von ca. 68000 g/mol.

### Beispiel 3

123,40 g (0,25 mol) Methylpolyethylenglykol (Mw 500), 84,08 g (0,08 mol) Pluriol A 1020 E + 20 % PO (1000g/mol)* und 35,57 g (0,363 mol) Maleinsäureanhydrit werden mit 0,21 g (2,56 mmol) Natriumacetat versetzt und 1 h bei 80 °C gerührt. Anschließend gibt man unter Rühren 0,61 g (6,25 mmol) Methansulfonsäure und 34,43 g (0,40 mol) Vinylacetat zu und dosiert bei 85 °C innerhalb von 1 h 5,04 g (15,62 mmol) Dibenzoylperoxid (75 %) zu. Man lässt noch 1 h unter Wärmezufuhr rühren, wobei ein maximaler Druck von 1,0 bar entsteht. Nach dem Abkühlen erhält man mit nahezu quantitativem Umsatz ein sehr flüssiges Polymer mit einem Molekulargewicht von ca. 30000 g/mol.
* bedeutet: Methylpolyethylenglycol mit 20% Propylenoxid gepfropft.

### Beispiel 4

230,48 g (0,39 mol) Methylpolyethylenglykol-monomaleat (500 MPEG), 47,40 g (0,55 mol) Vinylacetat und 0,80 g (8,34 mmol) Methansulfonsäure werden vorgelegt und bei 75 - 80 °C 6,72 g (20,82 mmol) Dibenzoylperoxid (75 %), 9,69 g (83,4 mmol) Maleinsäure und 0,89 g (8,34 mmol) 3-Mercaptopropionsäure innerhalb 1 h zudosiert, wobei sich ein Spitzendruck von ca. 1,4 bar entwickelt. Nach beendeter Zugabe wird noch eine Stunde unter Abkühlung der Reaktionsmischung gerührt. Man erhält ein bernsteinfarbenes, gießfähiges Polymer mit nahezu quantitativem Umsatz und einem Molekulargewicht (M_{w}) von ca. 20000 g/mol.

### Beispiel 5

129,55 g (0,22 mol) Methylpolyethylenglykol-monomaleat (500 MPEG), 150,80 g (0,07 mol) Methylpolyethylenglykol-monomaleat (2000 MPEG), 37,66 g (0,44 mol) Vinylacetat und 0,61 g (6,25 mmol) Methansulfonsäure werden vorgelegt und bei 86 °C 5,05 g (15,62 mmol) Dibenzoylperoxid innerhalb 1 h zudosiert, wobei sich ein Spitzendruck von ca. 0,5 bar entwickelt.

### Beispiel 6

259,38 g (0,43 mol) Methylpolyethylenglykol-monomaleat (500 MPEG) und 0,92 g (9,38 mmol) Methansulfonsäure werden vorgelegt und bei 60 °C über die beiden Zuläufe separat 7,56 g (23,43 mmol) Dibenzoylperoxid (75 %) und 56,5 g (0,66 mol) Vinylacetat innerhalb 1 h zudosiert, wobei sich ein Spitzendruck von 0,8 bar entwickelt. Nach beendeter Zugabe wird noch eine Stunde gerührt, wobei sich die Reaktionsmischung abkühlt. Man erhält ein gelbfarbenes, gießfähiges Polymer mit fast quantitativem Umsatz und einem Molekulargewicht von rund 40000 g/mol und einer Polydispersität von 2,3 in der wässrigen GPC.

### Beispiel 7

Eingesetzte Stoffmengen wie unter Beispiel 6 beschrieben, jedoch erfolgt die separate Dosierung des Initiators und des Vinylacetats bei 66°C. Es bildet sich ein Spitzendruck von 0,7 bar. Nach beendeter Zugabe wird noch eine Stunde gerührt, wobei sich die Reaktionsmischung abkühlt. Man erhält ein gelbfarbenes, honigartiges Polymer mit fast quantitativem Umsatz und einem Molekulargewicht von rund 37000 g/mol und einer Polydispersität (M_{w}:Mn) von 2,75 in der wässrigen GPC.

### Beispiel 8

455,0 g (0,91 mol) Methylpolyethylenglykol (Mw 500), 137,29 g (1,40 mol) Maleinsäureanhydrit und 0,75 g (9,1 mmol) Natriumacetat werden vorgelegt und 1 h bei 80 °C gerührt. Man lässt abkühlen und gibt 17,28 g (0,54 mol) Methanol zu und rührt 1 h bei 50 bis 60°C. Anschließend werden 132,44 g (1,54 mol) Vinylacetat und 2,68 g (28 mmol) Methansulfonsäure zugegeben und bei 80 °C 8,08 g Dibenzoylperoxid (75 %) innerhalb 30 min zudosiert. Nach beendeter Zugabe wird noch eine Stunde gerührt, wobei sich die Reaktionsmischung abkühlt.

### Beispiel 9

228,0 g (0,37 mol) Methylpolyethylenglykol-monomaleat (500 MPEG), 3,68 g (37,5 mmol) Maleinsäureanhydrit, 39,08 g (0,45 mol) Vinylacetat und 0,37 g (3,75 mmol) konzentrierte Schwefelsäure werden vorgelegt und bei 80 °C innerhalb von 2 h 1,67 g Dibenzoylperoxid (75 %) zudosiert. Es bildet sich ein Spitzendruck von 1,0 bar. Nach beendeter Zugabe wird noch eine Stunde gerührt, wobei sich die Reaktionsmischung abkühlt. Man erhält ein mit nahezu quantitativer Ausbeute noch gießfähiges Polymer mit einem Molekulargewicht von ca. 32000 g/mol.

### Beispiel 10a

### Drucklose Synthese:

280,88 g (0,46 mol) Methylpolyethylenglykol-monomaleat (500 MPEG), 4,51 g (46 mmol) Maleinsäureanhydrit, 61,24 g (0,71 mol) Vinylacetat und 1,0 g (10,32 mmol) Methansulfonsäure werden vorgelegt und auf 70°C unter Rühren erhitzt. Anschließend dosiert man innerhalb von 1 h 8,20 g (25,4 mmol) Dibenzoylperoxid (75 %) zu. Man lässt noch 2,5 h bei derselben Temperatur rühren und kühlt danach ab. Man erhält ein gelbfarbenes, honigartiges Polymer mit fast quantitativem Umsatz und einem Molekulargewicht von rund 37000 g/mol und einer Polydispersität (M_{w}:Mₙ) von 2,55 in der wässrigen GPC.

### Beispiel 10b

### Drucklose Synthese:

187,50 g (0,38 mol) Methylpolyethylenglykol (Mw = 500), 40,43 g (0,41 mol) Maleinsäureanhydrit und 0,31 g (3,8 mmol) Natriumacetat werden bei 80°C 1 h gerührt. Anschließend lässt man abkühlen und gibt 39,08 g (0,45 mol) Vinylacetat, 0,37 g (3,7 mmol) konzentrierte Schwefelsäure und 1,67 g (5,2 mmol) Dibenzoylperoxid zu und erhitzt auf 70 °C. Man lässt noch 6 h bei dieser Temperatur rühren und kühlt dann ab. Man erhält ein hellgelbes, gelartiges Polymer in nahezu quantitativer Ausbeute.

Es wurde Beispiel 6 mit 1 % Entschäumer versetzt

| Entschäumer | Zu Beginn | Bemerkung Nach 12 Wochen |
|---|---|---|
| Trisobutylphoshpat | Klare Lösung | Klare Lösung |
| Ibentin SG/707/AG | Trübe Emulsion Trübe Emulsion | Trübe Emulsion aber keine Entmischung feststellbar |
| Surfynol 2502 | Klare Lösung | Klare Lösung |

### Mischablauf Mörtelmischung:

Es werden 600 g Zementpulver trocken homogenisiert und in einen RILEM-Mischer gegeben. Dann wird die entsprechend einem W/Z-Wert benötigte Menge Wasser zugegeben und 30 s bei 140 U/min (Stufe I) gemischt. Die Zugabe des Sandgemisches erfolgt anschließend bei laufendem Mischer mit Hilfe eines Trichters und es wird 30 s bei 140 U/min (Stufe I) gemischt. Nach einer Mischpause von 1,5 min und gesäuberten Rändern vom Mischer wird eine entsprechende Menge Fließmittel zugegeben. Es wird weitere 60 s bei 285 U/min (Stufe II) gemischt und anschließend das Fließmaß (Ausbreitmaß) durch 15 maliges Klopfen auf einem Klopftisch mit Hägermann-Konus bestimmt.

### Mischablauf Betonmischung:

Für die Betonmischung wird ein 30-I-Mischer verwendet. Es werden 4,8 kg Zement und die entsprechende Menge an Zuschlägen 10 s lang trocken vorgemischt. Dann gibt man 300 ml Vorgabewasser dazu und nach weiteren 2 min des Mischens die entsprechend dem verwendeten W/Z-Wert benötigte Menge an Restwasser. Nach weiteren 60 s wird der Betonmischung das gelöste Fließmittel (0,2 Gew.-% Feststoff/Zement) zugegeben und der Mischvorgang nach 60 s mit der Ermittlung des Ausbreitmaßes beendet.

Rezepturen der Mörtel- und Betonmischung für Mörtel- und Betontests:

| | Mörteltest | | | Betontest | | |
|---|---|---|---|---|---|---|
| Zusammensetzung | S/Z-Wert^{(a)}= 2.2 | | Gewicht [g] | S/G-Wert^{(b)}= 0.47 | | Gewicht [kg/m³] |
| | | | | Quarzsand 0/0.5 | 8.0% | 152.1 |
| | | | | Quarzsand 0/1.0 | 3.0% | 56.5 |
| | Quarzsand | 30% | 178.2 | | | |
| Zuschläge | | | | Normsand 0/4 | 35.5% | 680.0 |
| | Normsand 0/0.25 | 70% | 415.8 | | | |
| | | | | Kies 4/8 | 15.5% | 294.2 |
| | | | | Kies 8/16 | 38.0% | 722.5 |
| Zement | CEM I 42.5R^{(c)} | | 270.0 | CEM I 42.5R^{(d)} | | 330.0 |
| Fließmittel^{(e)} | (20%-ige Lösung) | | 2.7 | (20%-ige Lösung) | | 3.2 |
| Wasser | | | (f) | | | (f) |

| | | | | | | |
|---|---|---|---|---|---|---|
| (a) S/Z-Wert = Sand/Zement-Wert = ∑ Sand [g] + Zement [g] (b) S/G-Wert = Sand/Sand-Kies-Wert = ∑ Sand [g]+ (∑ Sand [g]+ ∑ Kies [g]) (c) Zementherkunft: Karlstadt (Deutschland) (d) Zementherkunft: Bernburg (Deutschland) (e) 0.2 Masse-% Feststoff auf Zement (f) Die benötigte Wassermenge ist abhängig vom eingestellten W/Z-Wert^{(g)} entsprechend dem verwendeten Fließmittel. (g) W/Z-Wert = Wasser/Zement-Wert = ∑ Wasser [g] + Zement [g] | | | | | | |

### Mörtelergebnisse:

| Polymer-Nr. | Dos.^{(a)} | W/Z-Wert^{(b)} | Ausbreitmaß^{(c)} [cm] | | | |
|---|---|---|---|---|---|---|
| | | | 0' | 30' | 60' | 90' |
| Nullmischung | - | 0,55 | 25,0 | 23,7 | - | - |
| Glenium 27 | 0,24 | 0,49 | 25,0 | 24,5 | - | - |
| Glenium 51 | 0,2 | 0,395 | 24,5 | 23,1 | - | - |
| Beispiel 1a | 0,2 | 0,46 | 24,4 | 22,1 | - | - |
| Beispiel 2 | 0,2 | 0,46 | 25,0 | 25,6 | 24,4 | 21,2^{(d)} |
| Nullmischung | - | 0,55 | 24,7 | 22,6 | - | - |
| Glenium 27 | 0,24 | 0,48 | 24,7 | 24,5 | 24,4 | 24,7 |
| Glenium 51 | 0,2 | 0,39 | 24,1 | 23,3 | 22,0 | 21,3 |
| Beispiel 4 | 0,2 | 0,435 | 24,0 | 20,7 | - | - |
| Beispiel 5 | 0,2 | 0,47 | 23,2 | 24,9 | 22,4 | 20,9 |
| Beispiel 6 | 0,2 | 0,47 | 24,2 | 27,5 | 23,9 | 22,3 |
| Beispiel 7 | 0,2 | 0,47 | 24,0 | 25,8 | 22,3 | 21,3 |
| Nullmischung | - | 0,57 | 24,7 | 23,4 | 23,5 | 23,3 |
| Glenium27 | 0,24 | 0,49 | 24,3 | 24,9 | 24,3 | 24,5 |
| Glenium51 | 0,2 | 0,39 | 24,8 | 22,7 | 22,6 | 22,2 |
| Beispiel 8 | 0,2 | 0,47 | 24,0 | 26,9 | 23,5 | 21,9 |
| Beispiel 10b | 0,2 | 0,46 | 24,5 | 26,1 | 23,1 | 22,1 |

| | | | | | | |
|---|---|---|---|---|---|---|
| (a) Dos. = Dosierung [Masse% Polymer bezogen auf Zement] (b) W/Z-Wert = Wasser/Zement-Wert: Gibt die benötigte Wassermenge wieder, um bei konstanter Zementmenge einen fließfähigen Mörtel zu erzeugen. (c) Ausbreitmaß, bestimmt nach 0, 30, 60 und 90 min. (d) Nach 2 Stunden | | | | | | |

### Festigkeitsuntersuchungen mit Bernburg Zement

| Polymer | Dos.^{(a)} [%] | W/Z-Wert^{(b)} | Ausbreitmaß [cm]^{(c)} | Temp. [°C] | Dichte des Prüfkörpers [kg/m3] | Biegezugfestigkeit [N/mm²] 24h | Druckfestigkeit [N/mm²] 24h |
|---|---|---|---|---|---|---|---|
| Glenium 51 | 0,08 | 0,45 | 24 | 23,5 | - | 5,55 | 25,96 |
| Glenium 27 | 0,2 | 0,45 | 24,7 | 23,7 | - | 5,04 | 22,95 |
| Beispiel 3 | 0,2 | 0,45 | >30 | 23,1 | 2,276 | 5,61 | 26,18 |
| Beispiel 5 | 0,2 | 0,45 | 23,4 | 23,3 | 2,246 | 5,16 | 23,86 |
| Beispiel 9 | 0,2 | 0,45 | 27,6 | 23,2 | 2,286 | 5,4 | 24,34 |
| Beispiel 10b | 0,2 | 0,45 | 28,5 | 23,6 | 2,276 | 4,79 | 22,13 |

| | | | | | | | |
|---|---|---|---|---|---|---|---|
| (a) Dos. = Dosierung [Masse% Polymer bezogen auf Zement] (b) W/Z-Wert = Wasser/Zement-Wert: Gibt die benötigte Wassermenge wieder, um bei konstanter Zementmenge einen fließfähigen Mörtel zu erzeugen. (c) Ausbreitmaß, bestimmt nach 0 min. | | | | | | | |

### Betontests:

| Polymer-Nr. | Dos.^{(a)} | W/Z-Wert^{(b)} | Ausbreitmaß^{(c)} [cm] | | | | Frischbeton-Rohdichte [kg/m³] | Festigkeiten [N/mm²] | | |
|---|---|---|---|---|---|---|---|---|---|---|
| | | | 0' | 10' | 30' | 60' | | 16h | 24h | 7d |
| Glenium 27 | 0,40 | 0,5 | 60,5 | 60,5 | 58 | 58 | 2,4405 | 2,765 | - | - |
| Beispiel 4 | 0,24 | 0,5 | 62,5 | 59 | 49 | 42 | - | - | - | - |
| Beispiel 5 | 0,30 | 0,5 | 58 | 66 | 59 | 49,5 | 2,433 | 8,005 | 16,65 | 44,65 |
| Beispiel 6 | 0,30 | 0,5 | 62,5 | 67,5 | 64 | 52 | 2,4425 | 7,03 | 17,0 | 44,70 |
| Beispiel 7 | 0,30 | 0,5 | 62 | 65,5 | 63 | 49,5 | 2,4425 | 6,995 | 17,20 | 46,95 |
| Beispiel 10a | 0,30 | 0,5 | 62,5 | 65 | 59 | 49,5 | 2,427 | 7,31 | 16,10 | 46,20 |

| | | | | | | | | | | |
|---|---|---|---|---|---|---|---|---|---|---|
| a) Dos. = Dosierung [Masse% Polymer bezogen auf Zement] b) W/Z-Wert = Wasser/Zement-Wert: Gibt die benötigte Wassermenge wieder, um bei konstanter Zementmenge einen fließfähigen Mörtel zu erzeugen. c) Ausbreitmaß, bestimmt nach 0, 30, 60 und 90 min. | | | | | | | | | | |

Die Mörtel- und Betontests zeigen, dass die hergestellten Copolymere eine vergleichbare Wasserreduktion bewirken wie handelsübliche Produkte (Glenium 27, Glenium 51). Bei einer normalen Dosierung von 0,2 % kann eine ausreichende Verarbeitbarkeit der Baustoffmischungen über die Zeit erreicht werden. Aus den Ergebnissen der Festigkeitsuntersuchungen lassen sich keine Hinweise auf eine relevante Verzögerung der Hydratation dieser Mischungen erkennen, was a priori nicht zu erwarten wäre.

Durch die vorliegende Erfindung kann ein Dispergiermittel mit besonders niedrigen Rohstoffkosten bereitgestellt werden. Es werden vergleichbare Festigkeiten mit kürzeren Seitenketten als z.B. Glenium 27 erzielt. Die Copolymere besitzen eine sehr gute Lagerstablilität, wobei auf eine energiereiche Trocknung verzichtet werden kann. Darüber hinaus muss nicht mit einer Freisetzung von Acetaldehyd gerechnet werden.

## Patentansprüche

1. Verfahren zur Herstellung eines Copolymers durch Umsetzung eines Maleinsäurehalbesterderivats mit einem Vinylester in Anwesenheit eines radikalischen Polymerisationsinitiators und einer Säure mit einem pKa-Wert kleiner 1,8, so dass in dem Copolymer erzeugt werden
i) 10 bis 75 mol-% einer Maleinsäurehalbesterderivat-Struktureinheit α,
ii) 25 bis 90 mol-% einer Vinylester-Struktureinheit β,
wobei die Maleinsäurehalbesterderivat-Struktureinheit α durch folgende allgemeine Formel (I) repräsentiert wird 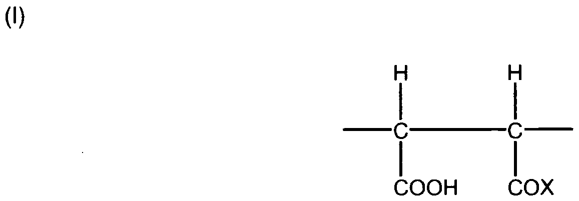 mit
X gleich oder verschieden sowie repräsentiert durch -O-(CₘH₂ₘO)ₙ-R¹ mit R¹ gleich oder verschieden sowie repräsentiert durch einen verzweigten oder unverzweigten C₁ bis C₂₀ Alkylrest, C₅ bis C₈ Cycloalkylrest und/ oder C₆ bis C₁₄ Alkylarylrest,
m gleich oder verschieden sowie repräsentiert durch 2, 3 und/oder 4,
n gleich oder verschieden sowie repräsentiert durch eine ganze Zahl von 1 bis 150,
sowie die Vinylester-Struktureinheit β durch folgende allgemeine Formel (II) repräsentiert wird 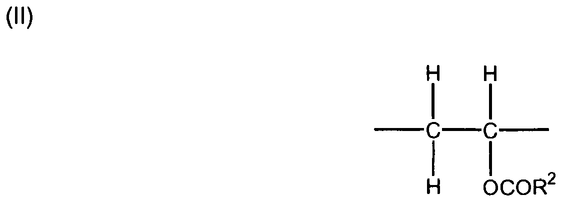 mit
R² gleich oder verschieden sowie repräsentiert durch einen verzweigten oder unverzweigten C₁ bis C₁₂ Alkylrest, und
die Umsetzung des Maleinsäurehalbesterderivats mit dem Vinylester in einem Reaktionsgemisch erfolgt, welches weniger als 10 Gew.-% Wasser aufweist.

2. Verfahren nach Anspruch 1, **dadurch gekennzeichnet, dass** das Reaktionsgemisch, in welchem die Umsetzung des Maleinsäurehalbesterderivats mit dem Vinylester erfolgt, pro insgesamt umgesetztes Mol Maleinsäurehalbesterderivat 0,001 mol bis 0,7 mol der Säure, sowie jeweils optional Maleinsäure, Maleinsäureanhydrit und Polyetheralkohol gemäß der allgemeinen Formel (III) enthält
(III) HO-(CₘH₂ₘO)ₙ-R³
mit
R³ gleich oder verschieden sowie repräsentiert durch einen verzweigten oder unverzweigten C₁ bis C₂₀ Alkylrest, C₅ bis C₈ Cycloalkylrest und/oder C₆ bis C₁₄ Alkylarylrest,
m gleich oder verschieden sowie repräsentiert durch 2, 3 und/oder 4,
n gleich oder verschieden sowie repräsentiert durch eine ganze Zahl von 1 bis 150.

3. Verfahren nach Anspruch 2, **dadurch gekennzeichnet, dass** die Umsetzung des Maleinsäurehalbesterderivats mit dem Vinylester in dem Reaktionsgemisch mit der Maßgabe erfolgt, dass die Summe der Gewichtsanteile des Copolymers, der Säure, des Maleinsäurehalbesterderivats, des Vinylesters, der Maleinsäure, des Maleinsäureanhydrits und des Polyetheralkohols der allgemeinen Formel (III) in dem Reaktionsgemisch mindestens 60 % beträgt.

4. Verfahren nach einem der Ansprüche 1 bis 3, **dadurch gekennzeichnet, dass** als Vinylester Vinylacetat eingesetzt wird und die Vinylester-Struktureinheit β so durch die allgemeine Formel (II) repräsentiert wird, dass R² gleich CH₃.

5. Verfahren nach einem der Ansprüche 1 bis 4, **dadurch gekennzeichnet, dass** durch Umsetzung des Maleinsäurehalbesterderivats mit dem Vinylacetat in dem Copolymer erzeugt werden
i) 35 bis 55, bevorzugt 45 bis 50 mol-% der MaleinsäureStruktureinheit α,
ii) 45 bis 65, bevorzugt 50 bis 55 mol-% der Vinylacetat-Struktureinheit β.

6. Verfahren nach einem der Ansprüche 1 bis 5, **dadurch gekennzeichnet, dass** die Maleinsäurehalbesterderivat-Struktureinheit α durch folgende allgemeine Formel (I) repräsentiert wird, 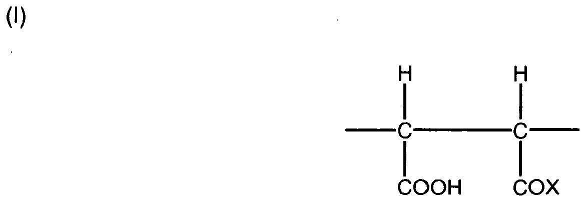 mit
X gleich oder verschieden sowie repräsentiert durch -O-(CₘH₂ₘO)ₙ-CH₃
m gleich oder verschieden sowie repräsentiert durch 2 und/oder 3,
n gleich oder verschieden sowie repräsentiert durch eine ganze Zahl von 4 bis 60.

7. Verfahren nach einem der Ansprüche 1 bis 6, **dadurch gekennzeichnet, dass** das Reaktionsgemisch weniger als 3 Gew.-% Wasser, bevorzugt weniger als 0,2 Gew.-% Wasser, enthält.

8. Verfahren nach einem der Ansprüche 2 bis 7, **dadurch gekennzeichnet, dass** das Reaktionsgemisch pro insgesamt umgesetztes Mol Maleinsäurehalbesterderivat 0,01 mol bis 0,3 mol, bevorzugt 0,05 mol bis 0,3 mol, der Säure enthält.

9. Verfahren nach einem der Ansprüche 1 bis 8, **dadurch gekennzeichnet, dass** die Säure einen pKa-Wert von kleiner 1,6, bevorzugt kleiner 1,3, aufweist.

10. Verfahren nach einem der Ansprüche 1 bis 9, **dadurch gekennzeichnet, dass** die Säure als Methansulfonsäure, Schwefelsäure, Para-Toluolsulfonsäure, Trifluormethansulfonsäure, Benzolsulfonsäure und/oder Trichloressigsäure oder einer Mischung aus mindestens zwei dieser Spezies, vorliegt.

11. Verfahren nach einem der Ansprüche 3 bis 10, **dadurch gekennzeichnet, dass** die Summe der Gewichtsanteile von dem Copolymer, der Säure, dem Maleinsäurehalbesterderivat, dem Vinylacetat, der Maleinsäure, dem Maleinsäureanhydrit und dem Polyetheralkohol der allgemeinen Formel (III) in dem Reaktionsgemisch mindestens 70 %, bevorzugt mindestens 90 %, beträgt.

12. Verfahren nach einem der Ansprüche 1 bis 11, **dadurch gekennzeichnet, dass** neben dem Maleinsäurehalbesterderivat und dem Vinylester zusätzlich auch Maleinsäure und/oder Maleinsäureanhydrit umgesetzt wird und in dem Copolymer erzeugt werden bis zu 75 Mol-% Struktureinheiten umfassend die Maleinsäurehalbesterderivat-Struktureinheit α, die Maleinsäurestruktureinheit α sowie die Maleinsäureanhydritstruktureinheit α ", wobei die Maleinsäurestruktureinheit α' sowie die Maleinsäureanhydritstruktureinheit α " jeweils durch folgende Formeln (IV) und (V) repräsentiert werden: 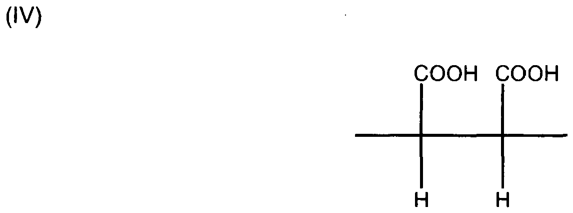 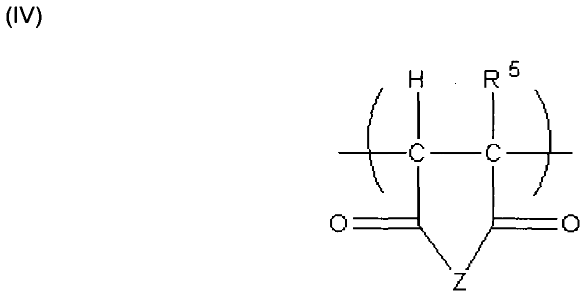 mit
R⁵ repräsentiert durch H und Z repräsentiert durch O.

13. Verfahren nach einem der Ansprüche 2 bis 12, **dadurch gekennzeichnet, dass** der Polyetheralkohol der allgemeinen Formel (III) gemäß HO-(CₘH₂ₘO)ₙ-CH₃ vorliegt, mit m gleich oder verschieden sowie repräsentiert durch 2 und/oder 3 sowie n gleich oder verschieden sowie repräsentiert durch eine ganze Zahl von 4 bis 60.

14. Verfahren nach einem der Ansprüche 2 bis 13, **dadurch gekennzeichnet, dass** in dem Reaktionsgemisch neben dem Polyetheralkohol gemäß der allgemeinen Formel (III) noch weitere Alkohole enthalten sind, welche maximal 12 Kohlenstoffatome aufweisen.

15. Verfahren nach Anspruch 14, **dadurch gekennzeichnet, dass** diese weiteren Alkohole, welche maximal 12 Kohlenstoffatome aufweisen, als primäre aliphatische Alkohole, insbesondere Methanol, Ethanol, n-Butanol oder als sekundäre Alkohole, insbesondere Isopropylalkohol, Cyclohexanol oder Mischungen davon vorliegen.

16. Verfahren nach Anspruch 14 oder 15, **dadurch gekennzeichnet, dass** die weiteren, maximal 12 Kohlenstoffatome aufweisenden Alkohole in dem Reaktionsgemisch gegenüber der Summe des Maleinsäurehalbesterderivats und des Polyetheralkohols gemäß der allgemeinen Formel (III) in einem molaren Unterschuss vorliegen.

17. Verfahren nach einem der Ansprüche 1 bis 16, **dadurch gekennzeichnet, dass** die Umsetzung des Maleinsäurehalbesterderivats mit dem Vinylester bei einer Temperatur von 0 bis 150 °C, bevorzugt 40 bis 140 °C und Drücken von 0 bis 5 bar, bevorzugt ca. Atmosphärendruck, durchgeführt wird.

18. Verfahren nach einem der Ansprüche 1 bis 17, **dadurch gekennzeichnet, dass** der radikalische Polymerisationsinitiator als Azoverbindung oder als organisches Peroxid, bevorzugt als Dibenzoylperoxid, vorliegt.

19. Verfahren nach einem der Ansprüche 1 bis 18, **dadurch gekennzeichnet, dass** die Umsetzung des Maleinsäurehalbesterderivats mit dem Vinylester mit einem Umsatz von mindestens 80 %, bevorzugt mindestens 90 %, bezogen auf die molare Summe von Maleinsäurehalbesterderivat und Vinylacetat erfolgt.

20. Verfahren nach einem der Ansprüche 1 bis 19, **dadurch gekennzeichnet, dass** nach Umsetzung des Maleinsäurehalbesterderivats mit dem Vinylester mit einer Base neutralisiert wird.

21. Copolymer, welches gemäß dem Verfahren nach einem der Ansprüche 1 bis 20 herstellbar ist.

22. Copolymer nach Anspruch 21, aufweisend ein gewichtsmittleres Molekulargewicht von 10000 bis 350000, bevorzugt von 20000 bis 200000.

23. Verwendung eines Copolymers nach Anspruch 21 oder 22 als Dispergiermittel für hydraulische Bindemittel.

24. Verwendung nach Anspruch 23, **dadurch gekennzeichnet, dass** das hydraulische Bindemittel als Zement, Kalk, Gips oder Anhydrit, bevorzugt als Zement vorliegt.

## Claims

1. Process for the preparation of a copolymer by reacting a maleic acid monoester derivative with a vinyl ester in the presence of a free radical polymerization initiator and of an acid having a pKa of less than 1.8 so that
i) 10 to 75 mol% of a maleic acid monoester derivative structural unit α,
ii) 25 to 90 mol% of a vinyl ester structural unit β,
are produced in the copolymer, the maleic acid monoester derivative structural unit α being represented by the following general formula (I) 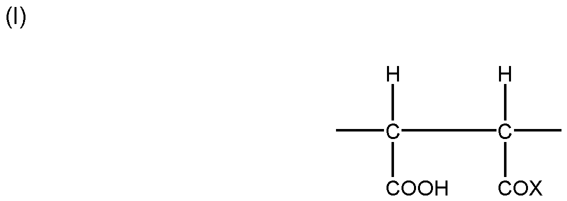 where
X is identical or different and is represented by -O-(CₘH₂ₘO)ₙ-R¹ where R¹ is identical or different and is represented by a branched or straight-chain C₁ to C₂₀ alkyl radical, C₅ to C₈ cycloalkyl radical and/or C₆ to C₁₄ alkylaryl radical,
m is identical or different and is represented by 2, 3 and/or 4,
n is identical or different and is represented by an integer from 1 to 150,
and the vinyl ester structural unit β being represented by the following general formula (II) 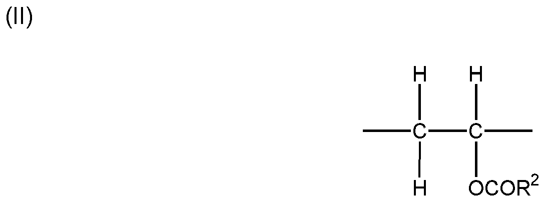 where
R² is identical or different and is represented by a branched or straight-chain C₁ to C₁₂ alkyl radical, and
the reaction of the maleic acid monoester derivative with the vinyl ester is effected in a reaction mixture which has less than 10% by weight of water.

2. Process according to Claim 1, **characterized in that** the reaction mixture in which the reaction of the maleic acid monoester derivative with the vinyl ester is effected contains 0.001 mol to 0.7 mol of the acid per total reacted mole of maleic acid monoester derivative and in each case optionally maleic acid, maleic anhydride and polyether alcohol according to the general formula (III)
(III) HO-(CₘH₂ₘO)ₙ-R³
where
R³ is identical or different and is represented by a branched or straight-chain C₁ to C₂₀ alkyl radical, C₅ to C₈ cycloalkyl radical and/or C₆ to C₁₄ alkylaryl radical,
m is identical or different and is represented by 2, 3 and/or 4,
n is identical or different and is represented by an integer from 1 to 150.

3. Process according to Claim 2, **characterized in that** the reaction of the maleic acid monoester derivative with the vinyl ester is effected in the reaction mixture with the proviso that the sum of the proportions by weight of the copolymer, of the acid, of the maleic acid monoester derivative, of the vinyl ester, of the maleic acid, of the maleic anhydride and of the polyether alcohol of the general formula (III) in the reaction mixture is at least 60%.

4. Process according to any of Claims 1 to 3, **characterized in that** the vinyl ester used is vinyl acetate and the vinyl ester structural unit β is represented by the general formula (II) so that R² is CH₃.

5. Process according to any of Claims 1 to 4, **characterized in that**, by reaction of the maleic acid monoester derivative with the vinyl acetate,
i) 35 to 55, preferably 45 to 50, mol% of the maleic acid structural unit α,
ii) 45 to 65, preferably 50 to 55, mol% of the vinyl acetate structural unit β
are produced in the copolymer.

6. Process according to any of Claims 1 to 5, **characterized in that** the maleic acid monoester derivative structural unit α is represented by the following general formula (I), 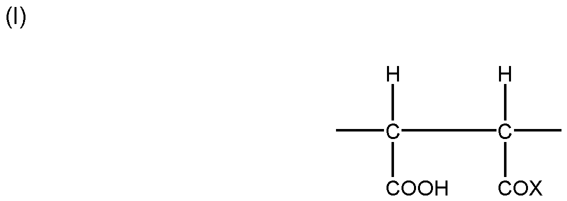 where
X is identical or different and is represented by -O-(CₘH₂ₘO)ₙ-CH₃,
m is identical or different and is represented by 2 and/or 3,
n is identical or different and is represented by an integer from 4 to 60.

7. Process according to any of Claims 1 to 6, **characterized in that** the reaction mixture contains less than 3% by weight of water, preferably less than 0.2% by weight of water.

8. Process according to any of Claims 2 to 7, **characterized in that** the reaction mixture contains 0.01 mol to 0.3 mol, preferably 0.05 mol to 0.3 mol, of the acid per total reacted mole of maleic acid monoester derivative.

9. Process according to any of Claims 1 to 8, **characterized in that** the acid has a pKa of less than 1.6, preferably less than 1.3.

10. Process according to any of Claims 1 to 9, **characterized in that** the acid is present as methanesulphonic acid, sulphuric acid, para-toluenesulphonic acid, trifluoromethanesulphonic acid, benzenesulphonic acid and/or trichloroacetic acid or a mixture of at least two of these species.

11. Process according to any of Claims 3 to 10, **characterized in that** the sum of the proportions by weight of the copolymer, of the acid, of the maleic acid monoester derivative, of the vinyl acetate, of the maleic acid, of the maleic anhydride and of the polyether alcohol of the general formula (III) in the reaction mixture is at least 70%, preferably at least 90%.

12. Process according to any of Claims 1 to 11, **characterized in that**, in addition to the maleic acid monoester derivative and the vinyl ester, maleic acid and/or maleic anhydride is additionally reacted and up to 75 mol% of structural units comprising the maleic acid monoester derivative structural unit α, the maleic acid structural unit α' and the maleic anhydride structural unit α" are produced in the copolymer, the maleic acid structural unit α*'* and the maleic anhydride structural unit α" each being represented by the following formulae (IV) and (V): 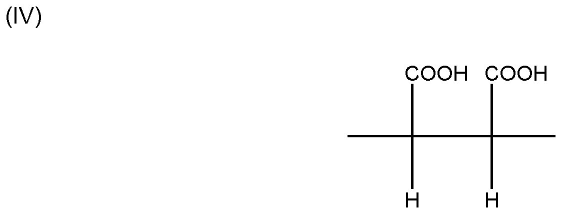 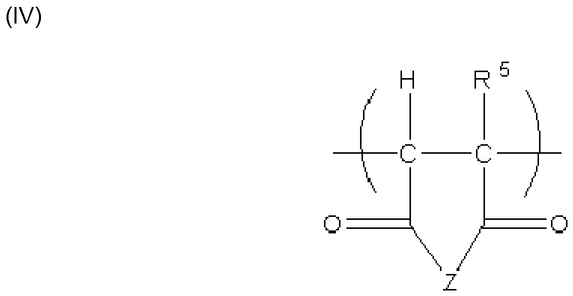 where
R⁵ is represented by H and Z is represented by O.

13. Process according to any of Claims 2 to 12, **characterized in that** the polyether alcohol of the general formula (III) is present according to HO-(CₘH₂ₘO)ₙ-CH₃ where m is identical or different and is represented by 2 and/or 3 and n is identical or different and is represented by an integer from 4 to 60.

14. Process according to any of Claims 2 to 13, **characterized in that** further alcohols which have not more than 12 carbon atoms are present in the reaction mixture in addition to the polyether alcohol according to the general formula (III).

15. Process according to Claim 14, **characterized in that** these further alcohols which have not more than 12 carbon atoms are present as primary aliphatic alcohols, in particular methanol, ethanol, or n-butanol, or as secondary alcohols, in particular isopropyl alcohol, cyclohexanol, or mixtures thereof.

16. Process according to Claim 14 or 15, **characterized in that** the further alcohols having not more than 12 carbon atoms are present in the reaction mixture in a molar deficit compared with the sum of the maleic acid monoester derivative and of the polyether alcohol according to the general formula (III).

17. Process according to any of Claims 1 to 16, **characterized in that** the reaction of the maleic acid monoester derivative with the vinyl ester is carried out at a temperature of 0 to 150°C, preferably 40 to 140°C, and pressures of 0 to 5 bar, preferably about atmospheric pressure.

18. Process according to any of Claims 1 to 17, **characterized in that** the free radical polymerization initiator is present as an azo compound or as an organic peroxide, preferably as dibenzoyl peroxide.

19. Process according to any of Claims 1 to 18, **characterized in that** the reaction of the maleic acid monoester derivative with the vinyl ester is effected with a conversion of at least 80%, preferably at least 90%, based on the molar sum of maleic acid monoester derivative and vinyl acetate.

20. Process according to any of Claims 1 to 19, **characterized in that**, after reaction of the maleic acid monoester derivative with the vinyl ester, neutralization is effected with a base.

21. Copolymer which can be prepared by the process according to any of Claims 1 to 20.

22. Copolymer according to Claim 21, having a weight average molecular weight of 10 000 to 350 000, preferably 20 000 to 200 000.

23. Use of a copolymer according to Claim 21 or 22 as a dispersant for hydraulic binders.

24. Use according to Claim 23, **characterized in that** the hydraulic binder is present as cement, lime, gypsum or anhydrite, preferably as cement.

## Revendications

1. Procédé de fabrication d'un copolymère par conversion d'un dérivé de semi-ester de l'acide maléique avec un ester de vinyle en présence d'un initiateur de polymérisation radicalaire et d'un acide avec une valeur de pKa inférieure à 1,8, de telle manière que l'on obtienne dans le copolymère
i) 10 à 75 % molaires d'une unité de structure de dérivé de semi-ester de l'acide maléique α,
ii) 25 à 90 % molaires d'une unité de structure d'ester de vinyle β,
dans lequel l'unité de structure de dérivé de semi-ester de l'acide maléique α est représentée par la formule générale suivante (I) 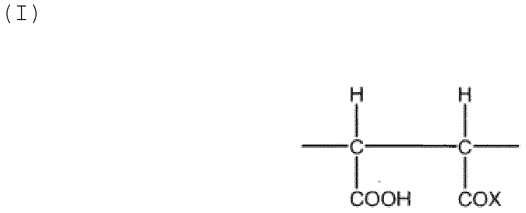 avec
X identique ou différent et représenté par -O-(CₘH₂ₘO)ₙ-R¹ avec R¹ identique ou différent et représenté par un radical alkyle C₁ à C₂₀, un radical cycloalkyle C₅ à C₈ et/ou un radical alkylaryle C₆ à C₁₄ ramifié ou non ramifié,
m identique ou différent et représenté par 2, 3 et/ou 4,
n identique ou différent et représenté par un nombre entier de 1 à 150,
et l'unité de structure d'ester de vinyle β est représentée par la formule générale suivante (II) 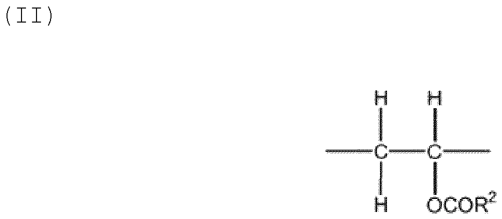 avec
R² identique ou différent et représenté par un radical alkyle C₁ à C₁₂ ramifié ou non ramifié, et
la conversion du dérivé de semi-ester de l'acide maléique avec l'ester de vinyle est effectuée dans un mélange de réaction, qui présente moins de 10 % en poids d'eau.

2. Procédé selon la revendication 1, **caractérisé en ce que** le mélange de réaction, dans lequel la conversion du dérivé de semi-ester de l'acide maléique avec l'ester de vinyle est effectuée, contient au total par mole de dérivé de semi-ester de l'acide maléique 0,001 mole à 0,7 mole de l'acide, ainsi que respectivement en option de l'acide maléique, de l'anhydrite de l'acide maléique et un polyéther alcool de la formule générale (III)
(III) HO- (CₘH₂ₘO)ₙ-R³
avec
R³ identique ou différent et représenté par un radical alkyle C₁ à C₂₀, un radical cycloalkyle C₅ à C₈ et/ou un radical alkylaryle C₆ à C₁₄ ramifié ou non ramifié,
m identique ou différent et représenté par 2, 3 et/ou 4,
n identique ou différent et représenté par un nombre entier de 1 à 150.

3. Procédé selon la revendication 2, **caractérisé en ce que** la conversion du dérivé de semi-ester de l'acide maléique avec l'ester de vinyle est effectuée dans le mélange de réaction avec la condition que la somme des pourcentages en poids du copolymère, de l'acide, du dérivé de semi-ester de l'acide maléique, de l'ester de vinyle, de l'acide maléique, de l'anhydrite de l'acide maléique et du polyéther alcool de la formule générale (III) s'élève à au moins 60 % dans le mélange de réaction.

4. Procédé selon l'une quelconque des revendications 1 à 3, **caractérisé en ce que** l'on utilise de l'acétate de vinyle comme ester de vinyle et l'unité de structure de l'ester de vinyle β est représentée par la formule générale (II), de telle manière que R² soit identique à CH₃.

5. Procédé selon l'une quelconque des revendications 1 à 4, **caractérisé en ce que**, par conversion du dérivé de semi-ester de l'acide maléique avec l'acétate de vinyle, on obtient dans le copolymère
i) 35 à 55, de préférence 45 à 50 % molaires de l'unité de structure de l'acide maléique α,
ii) 45 à 65, de préférence 50 à 55 % molaires de l'unité de structure de l'acétate de vinyle β.

6. Procédé selon l'une quelconque des revendications 1 à 5, **caractérisé en ce que** l'unité de structure du dérivé de semi-ester de l'acide maléique α est représentée par la formule suivante (I), 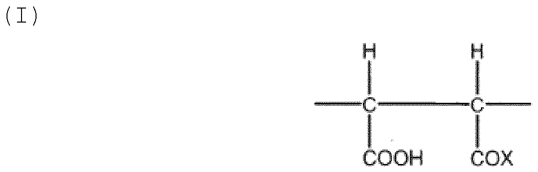 avec
X identique ou différent et représenté par -O-(CₘH₂ₘO)ₙ-CH₃
m identique ou différent et représenté par 2 et/ou 3,
n identique ou différent et représenté par un nombre entier de 4 à 60.

7. Procédé selon l'une quelconque des revendications 1 à 6, **caractérisé en ce que** le mélange de réaction contient moins de 3 % en poids d'eau, de préférence moins de 0,2 % en poids d'eau.

8. Procédé selon l'une quelconque des revendications 2 à 7, **caractérisé en ce que** le mélange de réaction contient, par mole de dérivé de semi-ester de l'acide maléique convertie, au total 0,01 mole à 0,3 mole, de préférence 0,05 mole à 0,3 mole, de l'acide.

9. Procédé selon l'une quelconque des revendications 1 à 8, **caractérisé en ce que** l'acide présente une valeur de pKa inférieure à 1,6, de préférence inférieure à 1,3.

10. Procédé selon l'une quelconque des revendications 1 à 9, **caractérisé en ce que** l'acide est présent sous la forme d'acide méthanesulfonique, d'acide sulfurique, d'acide paratoluolsulfonique, d'acide trifluorométhanesulfonique, d'acide benzolsulfonique et/ou d'acide trichloroacétique ou d'un mélange d'au moins deux de ces acides.

11. Procédé selon l'une quelconque des revendications 3 à 10, **caractérisé en ce que** la somme des pourcentages en poids du copolymère, de l'acide, du dérivé de semi-ester de l'acide maléique, de l'acétate de vinyle, de l'acide maléique, de l'anhydrite de l'acide maléique et du polyéther alcool de la formule générale (III) s'élève à au moins 70 %, de préférence à au moins 90 %, dans le mélange de réaction.

12. Procédé selon l'une quelconque des revendications 1 à 11, **caractérisé en ce que**, en plus du dérivé de semi-ester de l'acide maléique et de l'ester de vinyle, on convertit en outre également de l'acide maléique et/ou de l'anhydrite de l'acide maléique et on produit dans le copolymère jusqu'à 75 % molaires d'unités de structure contenant l'unité de structure du dérivé de semi-ester de l'acide maléique α, l'unité de structure de l'acide maléique α' ainsi que l'unité de structure de l'anhydrite de l'acide maléique α", dans lequel l'unité de structure de l'acide maléique α' ainsi que l'unité de structure de l'anhydrite de l'acide maléique α" sont représentées respectivement par les formules suivantes (IV) et (V): 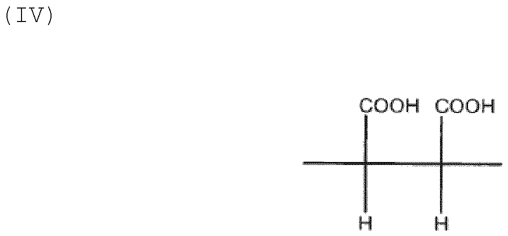 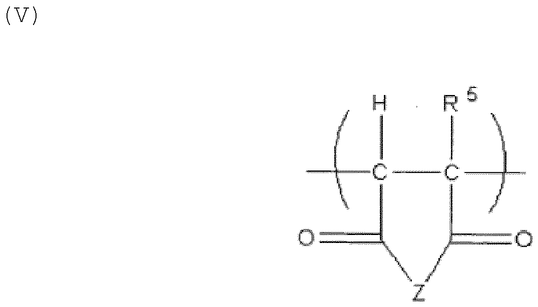 avec
R⁵ représenté par H et Z représenté par O.

13. Procédé selon l'une quelconque des revendications 2 à 12, **caractérisé en ce que** le polyéther alcool de la formule générale (III) est présent sous la forme HO-(CₘH₂ₘO)ₙ-CH₃, avec m identique ou différent et représenté par 2 et/ou 3 ainsi que n identique ou différent et représenté par un nombre entier de 4 à 60.

14. Procédé selon l'une quelconque des revendications 2 à 13, **caractérisé en ce que** le mélange de réaction contient encore, en plus du polyéther alcool selon la formule générale (III), d'autres alcools qui présentent au maximum 12 atomes de carbone.

15. Procédé selon la revendication 14, **caractérisé en ce que** ces autres alcools, qui présentent au maximum 12 atomes de carbone, sont présents sous la forme d'alcools aliphatiques primaires, en particulier méthanol, éthanol, n-butanol ou d'alcools secondaires, en particulier alcool isopropylique, cyclohexanol ou de mélanges de ceux-ci.

16. Procédé selon la revendication 14 ou 15, **caractérisé en ce que** les autres alcools présentant au maximum 12 atomes de carbone sont présents dans le mélange de réaction avec un déficit molaire par rapport à la somme du dérivé de semi-ester de l'acide maléique et du polyéther alcool selon la formule générale (III).

17. Procédé selon l'une quelconque des revendications 1 à 16, **caractérisé en ce que** l'on effectue la conversion du dérivé de semi-ester de l'acide maléique avec l'ester de vinyle à une température de 0 à 150°C, de préférence de 40 à 140°C et à des pressions de 0 à 5 bars, de préférence sensiblement à la pression atmosphérique.

18. Procédé selon l'une quelconque des revendications 1 à 17, **caractérisé en ce que** l'initiateur de polymérisation radicalaire est présent sous la forme de composé azoté ou de peroxyde organique, de préférence de peroxyde de dibenzoyle.

19. Procédé selon l'une quelconque des revendications 1 à 18, **caractérisé en ce que** l'on effectue la conversion du dérivé de semi-ester de l'acide maléique avec l'ester de vinyle avec un taux de conversion d'au moins 80 %, de préférence d'au moins 90 %, rapporté à la somme molaire du dérivé de semi-ester de l'acide maléique et de l'acétate de vinyle.

20. Procédé selon l'une quelconque des revendications 1 à 19, **caractérisé en ce que**, après la conversion du dérivé de semi-ester de l'acide maléique avec l'ester de vinyle, on neutralise avec une base.

21. Copolymère, qui peut être fabriqué avec le procédé selon l'une quelconque des revendications 1 à 20.

22. Copolymère selon la revendication 21, présentant un poids moléculaire moyen de 10000 à 350000, de préférence de 20000 à 200000.

23. Utilisation d'un copolymère selon la revendication 21 ou 22 comme agent dispersant pour des liants hydrauliques.

24. Utilisation selon la revendication 23, **caractérisée en ce que** le liant hydraulique se présente sous la forme de ciment, chaux, plâtre ou anhydrite, de préférence de ciment.
